# FASCICULE DE BREVET EUROPEEN

(11) **EP 3 176 651 B1**
(45) Date de publication et mention de la délivrance du brevet: **12.09.2018**
(21) Numéro de dépôt: 15197406.0
(22) Date de dépôt: 02.12.2015
(51) Int. Cl.: G04B 17/06, G04B 17/22, G04B 43/00, C22C 22/00, C22C 25/00, C22C 38/04, C22C 38/08, C22C 38/38, C22C 38/58

(54) **PROCÉDÉ DE FABRICATION D'UN RESSORT-SPIRAL D'HORLOGERIE**
HERSTELLUNGSVERFAHREN EINER SPIRALFEDER FÜR EINE UHR
METHOD FOR MANUFACTURING A TIMEPIECE HAIRSPRING

(43) Date de publication de la demande: 07.06.2017
(73) Titulaire: Nivarox-FAR S.A., 2400 Le Locle (CH)
(72) Inventeur: Charbon, Christian, 2054 Chézard-St-Martin (CH); Plankert, Guido, 8113 Boppelsen (CH)
(74) Mandataire: Giraud, Eric

(56) Documents cités:
- CH-A- 196 408
- CH-A- 286 912
- FR-A- 1 255 345
- US-A- 2 419 825

## Description

### Domaine de l'invention

L'invention concerne un procédé de fabrication d'un ressort-spiral d'horlogerie compensé en température et antiferromagnétique.

L'invention concerne le domaine des composants horlogers influant sur la marche des mouvements, en particulier les composants des mécanismes d'échappement.

### Arrière-plan de l'invention

La compensation thermique de l'oscillateur balancier-spiral a été obtenue traditionnellement par l'utilisation d'un balancier bi-métallique et d'un spiral en acier. La découverte par Ch.-Ed. Guillaume de l'Elinvar a permis de simplifier l'oscillateur en associant un balancier monométallique à un spiral compensateur en Elinvar. Différentes variantes de l'alliage ont ensuite vu le jour sous différents nom commerciaux tels que « Nivarox », « Isoval », « Durinval », « Ni-span C », etc.

Tous ces alliages présentent le défaut de réagir fortement aux champs magnétiques car ils sont de nature ferromagnétique.

L'objet de la présente demande est de proposer un alliage compensateur qui soit insensible aux champs magnétiques.

La recherche horlogère a de tous temps cherché à mettre au point des alliages nouveaux, capables de performances particulières, en ce qui concerne la tenue en température, le caractère amagnétique ou encore antiferromagnétique des alliages.

Par exemple, le document CH 286912 au nom de ELGIN décrit un ressort en alliage cobalt-chrome-nickel, avec de 20 à 60% de cobalt, 15 à 30% de chrome, moins de 18% de fer, de 0,01 à 0,09% de béryllium, de 0,05 à 0,30% de carbone, avec un total nickel-fer compris entre 20 et 40%, et une teneur de nickel supérieure à celle du fer. Le document US 2419825 au nom de DINERSTEIN décrit aussi un alliage pour ressort à haute limite élastique, avec 30% de nickel, 9% de chrome, 1.5% de manganèse, 1% de silicium, 0,3% de tungstène, 0,06% de carbone sous forme de carbure de chrome, 0.5% de béryllium, des traces de calcium, et le reste en fer, avec un cycle d'élaboration très particulier.

Le document CH 196408 au nom de INSTITUT STRAUMANN décrit un ressort thermocompensateur en alliage trempant de nickel-fer-molybdène-béryllium, selon différentes compositions avec toujours plus de 35% de nickel, plus de 7% de molybdène, un pourcentage de béryllium assez variable dans la fourchette 0,1% à 1%, toujours moins de 3% de chrome.

Les alliages de type fer-manganèse-nickel-chrome passent pour présenter théoriquement de bonnes qualités antiferromagnétiques, et, plus précisément, les alliages fer-manganèse-nickel-chrome-béryllium. Toutefois il est très difficile de déterminer des compositions et des modes d'élaboration qui permettent d'assurer, de façon reproductible, de bonnes caractéristiques de compensation thermique, avec un domaine aussi plat que possible, dans les températures usuelles pour l'horlogerie, typiquement de 8°C à 38°C, de façon à éviter l'utilisation de composants bi-matériaux habituellement utilisés pour compenser les dérives thermiques.

En effet, même si une composition particulière devrait être capable de propriétés thermiques particulières, il s'avère que la réalisation de ces alliages est extrêmement délicate, et que des écarts très réduits sur certains paramètres amènent une grande diversité de résultats. Des essais de routine ne peuvent absolument pas conduire un métallurgiste aux performances recherchées.

Le façonnage des composants ne fait qu'ajouter à la complexité de la tâche, en raison du grand nombre de paramètres opératoires liés d'une part, à l'élaboration de l'alliage, et d'autre part à sa mise en forme.

### Résumé de l'invention

L'invention se propose donc de définir un procédé de fabrication de ressort-spiral d'horlogerie compensé en température et antiferromagnétique, selon la revendication 1.

### Description détaillée des modes de réalisation préférés

L'invention concerne un procédé de fabrication d'un ressort-spiral d'horlogerie compensé en température et antiferromagnétique.

Selon l'invention, ce procédé comporte les étapes suivantes :
- sélectionner un alliage compensateur amagnétique, du type fer-chrome-nickel-manganèse-béryllium, comportant, en masse, et en pourcentage du total, bornes comprises:
   - de 21,0% à 25,0% de manganèse,
   - de 9,0% à 13,0% de nickel,
   - de 6,0% à 15,0% de chrome,
   - de 0,2% à 2,0% de béryllium,
   - le reste en fer,
   - le total de nickel et de manganèse étant supérieur ou égal à 33,0%,
- élaborer ledit alliage pour l'obtention d'un brut,
- mettre en forme ledit brut par fonderie et/ou forge et/ou tréfilage et/ou laminage et/ou étirage, pour l'obtention d'un fil ébauche de spiral ;
- estrapader ledit fil pour l'obtention d'un spiral,
- appliquer audit spiral au moins un traitement thermique de fixage, par recuit à une température comprise entre 540°C et 650°C, pendant une durée de 30 à 200 minutes pour l'obtention d'un ressort-spiral.

Dans une mise en oeuvre particulière de ce procédé, cet alliage comporte, en masse, et en pourcentage du total, de 10,5% à 13,0% de nickel.

Plus particulièrement, cet alliage comporte, en masse, et en pourcentage du total, de 11,0% à 13,0% de nickel.

Dans une mise en oeuvre particulière de ce procédé, cet alliage comporte, en masse, et en pourcentage du total, plus de 7,5% de chrome.

Plus particulièrement cet alliage comporte, en masse, et en pourcentage du total, plus de 10,5% de chrome.

Dans une mise en oeuvre particulière de ce procédé, cet alliage comporte, en masse, et en pourcentage du total, de 21,0% à 23,0% de manganèse.

Dans une mise en oeuvre particulière de ce procédé, cet alliage comporte, en masse, et en pourcentage du total, un total de nickel et de manganèse supérieur ou égal à 33,0%.

Plus particulièrement, cet alliage comporte, en masse, et en pourcentage du total, un total de nickel et de manganèse supérieur ou égal à 34,0%.

Plus particulièrement encore, cet alliage comporte, en masse, et en pourcentage du total, un total de nickel et de manganèse inférieur ou égal à 35,5%.

## Revendications

1. Procédé de fabrication d'un ressort-spiral d'horlogerie compensé en température et antiferromagnétique, **caractérisé en ce que** ledit procédé comporte les étapes suivantes :
- sélectionner un alliage compensateur amagnétique, du type fer-chrome-nickel-manganèse-béryllium, comportant, en masse, et en pourcentage du total, bornes comprises:
- de 21,0% à 25,0% de manganèse,
- de 9,0% à 13,0% de nickel,
- de 6,0% à 15,0% de chrome,
- de 0,2% à 2,0% de béryllium,
- le reste en fer,
- le total de nickel et de manganèse étant supérieur ou égal à 33,0%,
- élaborer ledit alliage pour l'obtention d'un brut,
- mettre en forme ledit brut par fonderie et/ou forge et/ou tréfilage et/ou laminage et/ou étirage, pour l'obtention d'un fil ébauche de spiral ;
- estrapader ledit fil pour l'obtention d'un spiral,
- appliquer audit spiral au moins un traitement thermique de fixage, par recuit à une température comprise entre 540°C et 650°C, pendant une durée de 30 à 200 minutes pour l'obtention d'un ressort-spiral.

2. Procédé selon la revendication 1, **caractérisé en ce que** ledit alliage comporte, en masse, et en pourcentage du total, de 10,5% à 13,0% de nickel.

3. Procédé selon la revendication 2, **caractérisé en ce que** ledit alliage comporte, en masse, et en pourcentage du total, de 11,0% à 13,0% de nickel.

4. Procédé selon l'une des revendications 1 à 3, **caractérisé en ce que** ledit alliage comporte, en masse, et en pourcentage du total, plus de 7,5% de chrome.

5. Procédé selon la revendication 4, **caractérisé en ce que** ledit alliage comporte, en masse, et en pourcentage du total, plus de 10,5% de chrome.

6. Procédé selon l'une des revendications 1 à 5, **caractérisé en ce que** ledit alliage comporte, en masse, et en pourcentage du total, de 21,0% à 23,0% de manganèse.

7. Procédé selon l'une des revendications 1 à 6, **caractérisé en ce que** ledit alliage comporte, en masse, et en pourcentage du total, un total de nickel et de manganèse supérieur ou égal à 33,0%.

8. Procédé selon la revendication 7, **caractérisé en ce que** ledit alliage comporte, en masse, et en pourcentage du total, un total de nickel et de manganèse supérieur ou égal à 34,0%.

9. Procédé selon l'une des revendications 1 à 8, **caractérisé en ce que** ledit alliage comporte, en masse, et en pourcentage du total, un total de nickel et de manganèse inférieur ou égal à 35,5%.

## Patentansprüche

1. Verfahren zum Herstellen einer temperaturkompensierten und antiferromagnetischen Uhrenspiralfeder, **dadurch gekennzeichnet, dass** das Verfahren die folgenden Schritte umfasst:
- Auswählen einer nichtmagnetischen Kompensationslegierung des Typs Eisen-Chrom-Nickel-Mangan-Beryllium, die in Prozent bezogen auf die Gesamtmasse, Grenzwerte eingeschlossen, enthält:
- 21,0 % bis 25,0 % Mangan,
- 9,0 % bis 13,0 % Nickel,
- 6,0 % bis 15,0 % Chrom,
- 0,2 % bis 2,0 % Beryllium,
- den Rest Eisen,
- wobei der Gesamtanteil von Nickel und Mangan größer oder gleich 33,0 % ist,
- Bearbeiten der Legierung, um einen Rohling zu erhalten,
- Formen des Rohlings durch Gießen und/oder Schmieden und/oder Ziehen und/oder Walzen und/oder Streckformen, um einen Spiraldrahtrohling zu erhalten;
- Federwinden des Drahts, um eine Spirale zu erhalten,
- Anwenden mindestens einer Fixierungswärmebehandlung auf die Spirale durch Glühen bei einer Temperatur im Bereich von 540 °C bis 650 °C während einer Dauer von 30 bis 200 Minuten, um eine Spiralfeder zu erhalten.

2. Verfahren nach Anspruch 1, **dadurch gekennzeichnet, dass** die Legierung in Prozent bezogen auf die Gesamtmasse 10,5 % bis 13,0 % Nickel enthält.

3. Verfahren nach Anspruch 2, **dadurch gekennzeichnet, dass** die Legierung in Prozent bezogen auf die Gesamtmasse 11,0 % bis 13,0 % Nickel enthält.

4. Verfahren nach einem der Ansprüche 1 bis 3, **dadurch gekennzeichnet, dass** die Legierung in Prozent bezogen auf die Gesamtmasse mehr als 7,5 % Chrom enthält.

5. Verfahren nach Anspruch 4, **dadurch gekennzeichnet, dass** die Legierung in Prozent bezogen auf die Gesamtmasse mehr als 10,5 % Chrom enthält.

6. Verfahren nach einem der Ansprüche 1 bis 5, **dadurch gekennzeichnet, dass** die Legierung in Prozent bezogen auf die Gesamtmasse 21,0 % bis 23,0 % Mangan enthält.

7. Verfahren nach einem der Ansprüche 1 bis 6, **dadurch gekennzeichnet dass** die Legierung in Prozent bezogen auf die Gesamtmasse einen Gesamtanteil von Nickel und von Mangan größer oder gleich 33,0 % enthält.

8. Verfahren nach Anspruch 7, **dadurch gekennzeichnet, dass** die Legierung in Prozent bezogen auf die Gesamtmasse einen Gesamtanteil von Nickel und Mangan größer oder gleich 34,0 % enthält.

9. Verfahren nach einem der Ansprüche 1 bis 8, **dadurch gekennzeichnet, dass** die Legierung in Prozent bezogen auf die Gesamtmasse einen Gesamtanteil von Nickel und Mangan kleiner oder gleich 35,5 % enthält.

## Claims

1. Method for fabrication of an antiferromagnetic and temperature compensated timepiece balance spring, **characterized in that** said method includes the following steps:
- selecting an amagnetic compensating alloy, of the iron-chromium-nickel-manganese-beryllium type, comprising, by mass percent, between and including the range limit values:
- from 21.0% to 25.0% of manganese,
- from 9.0% to 13.0% of nickel,
- from 6.0% to 15.0% of chromium,
- from 0.2% to 2.0% of beryllium,
- the remainder iron,
- the total of nickel and manganese being greater than or equal to 33.0%,
- working said alloy to obtain a blank,
- shaping said blank by casting and/or forging and/or wire drawing and/or rolling and/or drawing, to obtain a blank of spring wire;
- winding said wire on a winder to obtain a spiral spring,
- subjecting said spiral spring to at least a heat setting treatment, by annealing at a temperature comprised between 540°C and 650°C, for a duration of 30 to 200 minutes, to obtain a balance spring.

2. Method according to claim 1, **characterized in that** said alloy contains, by mass percent, from 10.5% to 13.0% of nickel.

3. Method according to claim 2, **characterized in that** said alloy contains, by mass percent, from 11.0% to 13.0% of nickel.

4. Method according to any of claims 1 to 3, **characterized in that** said alloy contains, by mass percent, more than 7.5% of chromium.

5. Method according to claim 4, **characterized in that** said alloy contains, by mass percent, more than 10.5% of chromium.

6. Method according to any of claims 1 to 5, **characterized in that** said alloy contains, by mass percent, from 21.0% to 23.0% of manganese.

7. Method according to any of claims 1 to 6, **characterized in that** said alloy contains, by mass percent, a total of nickel and manganese greater than or equal to 33.0%.

8. Method according to claim 7, **characterized in that** said alloy contains, by mass percent, a total of nickel and manganese greater than or equal to 34.0%.

9. Method according to any of claims 1 to 8, **characterized in that** said alloy contains, by mass percent, a total of nickel and manganese less than or equal to 35.5%.
